# EUROPÄISCHE PATENTSCHRIFT

(11) **EP 0 885 559 B1**
(45) Veröffentlichungstag und Bekanntmachung des Hinweises auf die Patenterteilung: **12.02.2003**
(21) Anmeldenummer: 98111175.0
(22) Anmeldetag: 18.06.1998
(51) Int. Cl.: A01K 5/00, A01F 29/00

(54) **Misch- und Verteilwagen für Futter**
Wagon for distributing and mixing animal feed
Véhicule pour la distribution et le mélange de fourrage

(30) Priorität: 19.06.1997 DE 19725888; 18.02.1998 DE 19806656
(43) Veröffentlichungstag der Anmeldung: 23.12.1998
(73) Patentinhaber: von der Heide Maschinenbau GmbH & Co. KG, 49479 Ibbenbüren 2 - Laggenbeck (DE)
(72) Erfinder: von der Heide, Hans, 49479 Ibbenbüren-Laggenbeck (DE)
(74) Vertreter: Schulze Horn & Partner GbR

(56) Entgegenhaltungen:
- EP-A- 0 265 751
- EP-A- 0 754 405
- DE-U- 29 511 311
- FR-A- 2 678 695

## Beschreibung

Die vorliegende Erfindung betrifft einen Misch- und Verteilwagen für Futter, nach dem Oberbegriff des Patentanspruchs 1. Ein derartiger Wagen ist aus DE 295 11 311 U bekannt.

Derartige Wagen sind aus dem praktischen Betrieb seit langem bekannt. Sie dienen in erster Linie dem Transport von Futter, beispielsweise Grün- oder Trockenfutter oder Silage, und können auch zum Ausfahren, also auch zum Verteilen von solchem Futter, eingesetzt werden. Wenn man zusätzlich zu dem bekannten Misch- und Verteilwagen ein Flurförderfahrzeug, wie einen Radlader, einsetzt, ist auch durch nacheinander erfolgendes Einbringen von Mischkomponenten ein gewisses Vermischen in dem kastenförmigen Aufbau möglich, wobei hierfür aber große Antriebsleistungen und somit sehr starke Antriebe oder Zugfahrzeuge nötig sind.

Es ist ein Nachteil der bekannten Wagen, daß die Mischund Verteilvorgänge sehr hohe Antriebsleistungen verlangen oder nur durch zusätzlichen Einsatz von Arbeitskräften oder durch weitere motorgetriebene Geräte, wie Flurförderfahrzeuge, möglich sind.

Es ist die Aufgabe der vorliegenden Erfindung, einen Misch- und Verteilwagen für Futter zu schaffen, bei dem das Mischen, Transportieren und Verteilen von Futter mit einer niedrigen Antriebsleistung und ohne zusätzliche Arbeitskräfte außer dem Fahrer eines Zugfahrzeugs oder des angetriebenen Misch- und Verteilwagens bequem und zuverlässig möglich ist.

Die Lösung der Aufgabe erfolgt mit einem Misch- und Verteilwagen der eingangs genannten Art mit den kennzeichnenden Merkmalen des Patentanspruchs 1.

Bei dem erfindungsgemäßen Misch- und Verteilwagen wir die vorteilhafte Wirkung erreicht, daß bei geschlossener Öffnung durch den auf dem Boden umlaufenden Förderstrang einerseits und den oder die Mischflügel andererseits eine intensive Vermischung des Futters in dem kastenförmigen Aufbau erfolgen kann, wobei eine in horizontaler Ebene verlaufende Bewegung und eine in vertikaler Ebene verlaufende Bewegung des Futters in der Nähe der Öffnung aufeinandertreffen. Außerdem ist bei geöffneter Öffnung und Verfahren des Misch- und Verteilwagens ein Austragen, also Verteilen des Futters, problemlos möglich. Die dafür erforderliche Antriebsleistung ist überraschend niedrig.

Die Ausführung des Wagens gemäß Anspruch 2 mit oben abgekanteten Blechwänden zur Bildung des Aufbaus sorgt dafür, daß der Aufbau stabil wird und gleichzeitig keine nach außen vorstehenden Verstärkungselemente aufweist, so daß der Wagen insgesamt schmal gehalten werden kann und so bei geringer Baubreite und zugleich geringer Bauhöhe auch in beengten Stallungen, wie sie häufig bei älteren Gebäuden vorliegen, einsetzbar ist.

Die Ausgestaltung gemäß Anspruch 3 gewährleistet, daß in dem Wagen bewegtes Futter bei seiner Bewegung nach oben im Bereich der Abkantung keine Staumöglichkeit hat; vielmehr wird durch die Verkleidungsbleche das aufsteigende Futter schräg nach innen abgeleitet und fällt dann unter Schwerkraftwirkung wieder zurück in das Innere des Aufbaus.

Die im Anspruch 4 angegebene Maßnahme sorgt dafür, daß die Mischwelle mit ihrem mindestens einen Mischflügel das mittels des Förderstranges zugeführte Futter schon erfaßt, bevor dieses sich an der die Mischwelle tragenden Stirnwand stauen kann. Hierdurch wird der Antriebsleistungsbedarf für die Drehung der Mischwelle auf ein Minimum reduziert, ohne daß die mit der Mischwelle und ihrem mindestens einen Mischflügel erzielbare Mischwirkung vermindert wird.

Vorteilhaft ist vorgesehen, daß der Förderstrang ein Kettenförderer mit einer Kette ist, zwischen oder an deren Gliedern mehrere voneinander beabstandete, quer oder schräg zur Förderrichtung nach außen weisende Mitnehmer angeordnet sind, die beim Umlauf der Kette die Oberseite des Bodens zum größten Teil überstreichen. Dadurch wird erreicht, daß ein robustes, als solches bekanntes Fördermittel in Form eines Kettenförderers einsetzbar ist, wobei mehrere Mitnehmer je nach Erfordernis in mehr oder weniger großem Abstand voneinander in die Kette einfügbar sind. Durch das Überstreichen des Bodens mit den Mitnehmern wird ein sicheres Bewegen des Futters zum Zweck des Mischens erreicht. Beim Austragen des Futters wird dieses mit Hilfe des Kettenförderers nach und nach zur Öffnung bewegt, so daß ein gleichmäßiger Futteraustrag gewährleistet ist.

Die im Anspruch 6 angegebene Ausstattung der Mitnehmer mit Diagonalstütze sorgt insbesondere für eine Entlastung der Kette, weil die bei der Förderung des Futters von diesem auf die Mitnehmer ausgeübten Hebelkräfte nun nicht mehr allein von dem den Mitnehmer tragenden einzelnen Kettenglied aufgenommen werden müssen, sondern zum größten Teil über die Diagonalstütze abgefangen und unschädlich in die Kette eingeleitet werden. Die Gefahr eines Reißens der Kette oder eines Verbiegens der Mitnehmer wird so weitestgehend ausgeschlossen.

Um die Gleitreibung zwischen den Mitnehmern und dem Boden auf ein Mindestmaß zu reduzieren, werden die Mitnehmer und gegebenenfalls deren Diagonalstützen gemäß Anspruch 7 ausgeführt.

Zur Führung der Kette und zur Aufnahme von an den Kettengliedern angreifenden Kippmomenten, die von den Mitnehmern eingeleitet werden, ist die Kette gemäß Anspruch 8 bevorzugt in Gleitschienen geführt.

Die Gleitschienen können gemäß Anspruch 9 beispielsweise als C-Profil aus Kunststoff oder Holz oder mit Kunststoff- oder Holzauflage ausgeführt sein.

Durch die im Anspruch 10 beschriebene Ausgestaltung des Wagens wird gewährleistet, daß der von der Kette belegte Flächenanteil des Bodens möglichst klein gehalten wird, so daß der verbleibende größere Teil des Bodens für den Mischvorgang zur Verfügung steht.

Um zu vermeiden, daß im mittleren Bereich des Bodens über der Kette Futter liegen bleibt, ohne daß es am Mischvorgang beteiligt ist, ist gemäß Anspruch 11 bevorzugt über den beiden Abschnitten der Kette eine gemeinsame, im Querschnitt dachförmige Abdeckung angebracht. Diese Abdeckung leitet das Futter einfach mittels Schwerkraft seitwärts ab, wo das Futter wieder in die Mischbewegung des Förderstranges einbezogen wird. Außerdem sorgt die Abdeckung aufgrund ihrer Dachform beim Einladen beispielsweise eines in sich relativ festen Silageblocks dafür, daß dieser beim Aufprall auf die Abdeckung zumindest in zwei Teile zerbricht, die jeweils für sich leichter zerkleinerbar sind, als dies bei einem noch kompletten Silageblock der Fall wäre.

Die im Anspruch 12 angegebene Ausführung der Enden der Abdeckung sorgt für einen stau- und reibungsarmen Transport des Futters im Bereich der Förderräder, wo der Futterstrom um 180° umgelenkt werden muß.

Weiter ist zweckmäßig vorgesehen, daß an dem in den Aufbau ragenden Teil der Mischwelle mehrere regelmäßig beabstandete, senkrecht zur Mischwelle stehende Mischflügel angeordnet sind, die bei Drehung der Mischwelle nahe am Boden entlangstreichen. Damit ist die Mischwelle mit ihren Mischflügeln mit einfachen Bauelementen leicht herstellbar; zugleich wird damit eine wirksame Durchmischung des Futters in dem kastenförmigen Aufbau erreicht.

Vorteilhaft reicht die Mischwelle mit ihrem freien Ende bis in den Bereich über dem benachbarten Förderrad, wobei in Mischwellenrichtung betrachtet der äußere Mischflügel über dem der Mischwelle benachbarten Förderrad umläuft. Hierdurch wird sichergestellt, daß der Futterstrom in seinem gesamten Querschnitt in den Wirkungsbereich der Mischflügel gelangt.

Gemäß Anspruch 15 sind bevorzugt mindestens drei in Umfangsrichtung der Mischwelle gleichmäßig versetzte Mischflügel unterschiedlicher Länge vorgesehen.

In weiterer Ausgestaltung ist dabei außerdem vorgesehen, daß die Länge der Mischflügel vom freien Ende der Mischwelle zur diese tragenden Stirnwand hin zunimmt. Mit dieser Verteilung der Mischflügellängen an der Mischwelle wird dafür gesorgt, daß bei Zuführung von Futter zunächst der kürzere Mischflügel in das Futter eingreift und dessen oberen Teil schon anhebt und lockert; erst danach greifen dann nach und nach die weiteren, jeweils etwas längeren Mischflügel in das Futter ein und lockern dann auch die weiter unten näher zum Boden liegenden Schichten des Futters auf. Durch diese Gestaltung wird insbesondere gewährleistet, daß mit einer relativ geringen Antriebsleistung die Mischwelle mit den Mischflügeln in Drehung versetzbar ist.

Um zu vermeiden, daß die Mischflügel das Futter gegen die Oberseite des Bodens oder die Innenseite der Wände des Aufbaus drücken, ist gemäß Anspruch 17 vorgesehen, daß die Mischflügel sichelförmig gekrümmt und zugespitzt sind, wobei die Krümmung in Drehrichtung der Mischwelle weist. Auf diese Weise greifen die Mischflügel schaufelartig in das Futter ein und heben dieses vom Boden nach oben hin an, ohne daß es zu einem Verpressen des Futters und damit zu einem starken Abbremsen der Mischflügel kommen kann.

Um Toträume im Wirkungsbereich der Mischflügel möglichst zu vermeiden, wird gemäß Anspruch 18 vorgeschlagen, daß der Übergang vom Boden zu der die Mischwelle tragenden Stirnwand zumindest im Wirkungsbereich der Mischflügel abgeschrägt oder ausgerundet ist.

Gemäß Anspruch 19 erfolgen vorteilhaft die Bewegung des Förderstranges und die Drehung der Mischwelle in einem solchen Verhältnis, daß bei Bewegung des Förderstranges um einen Mitnehmerabstand die Mischwelle eine ganze Umdrehung oder mehr ausführt. Auf diese Weise wird gewährleistet, daß das in den Wirkungsbereich der Mischflügel an der Mischwelle gelangende Futter ausreichend intensiv angehoben, gelockert und vermischt wird, ohne daß einerseits die Mischflügel überlastet werden oder andererseits eine unnötige Verwirbelung des Futters erfolgt.

In einer bevorzugten Ausgestaltung ist die Mischwelle über einen Kettentrieb von einer weiteren, etwa horizontalen Welle drehbar, die etwa in der Längsmittelachse des Bodens des kastenförmigen Aufbaus unterhalb der Förderräder verläuft, wobei die weitere Welle an ihrem einen Ende über ein Winkelgetriebe mit einem der Förderräger gekoppelt ist und an ihrem anderen Ende entweder eine Kupplung trägt, die mit einer Zapfwelle eines Zugfahrzeugs, insbesondere Traktors, verbindbar ist oder unmittelbar mit der eigenen Antriebseinheit des Wagens verbunden ist. Damit ist kein gesonderter Antrieb für die beiden Fördermittel, d.h. den Förderstrang und die Mischwelle des Misch- und Verteilwagens erforderlich. Die Verzweigung des eingeleiteten Drehmoments über einen als solchen bekannten Kettentrieb und über ein ebenso bekanntes Winkelgetriebe stellt eine konstruktiv einfache und robuste Lösung dar.

Zweckmäßig weisen die beiden Stirnrwände jeweils einen halbkreisförmigen Grundriß auf und verläuft die verschließbare Öffnung im Boden etwa halbkreisförmig parallel zur einen Stirnwand, wobei die öffnung durch einen formangepaßten Schieber verschließbar und stufenlos freigebbar ist. Durch die Lage und Form der Öffnung ist eine praktisch vollständige und zugleich gut dosierbare Entleerung des Aufbaus bei Bewegung des Kettenförderers und der Mischflügel gegeben. Beim Transport von Futter in dem kastenförmigen Aufbau ist die Öffnung verschlossen; der Antrieb des Kettenförderers und der Mischwelle kann dann abgeschaltet sein oder - zum Mischen während der Fahrt - schon eingeschaltet sein.

Insbesondere bei der Verarbeitung von langfaserigem Futter, wie Grassilage, im Misch- und Verteilwagen kann es vorkommen, daß sich die Fasern um die Mitnehmer legen und von diesen im Kreis mitgeschleift werden. Um dieses Mitschleifen zu verhindern und um einen Abwurf auch von langfaserigem Futter durch die Öffnung zu gewährleisten, ist gemäß Anspruch 22 vorgesehen, daß die wandabgewandte Begrenzung der Öffnung in Bewegungsrichtung des Förderstranges betrachtet stetig näher an die wandnahe Begrenzung der Öffnung heranläuft. Auf diese Weise übt die wandabgewandte Begrenzung der Öffnung eine Abstreifwirkung auf das von dem Mitnehmer gegebenenfalls mitgeschleifte langfaserige Futter aus, so daß auch solches Futter vom Mitnehmer zuverlässig durch die Öffnung abgeworfen wird.

In einer bevorzugten Ausgestaltung ist eine Achse mit zwei Rädern vorhanden, die unter dem Boden zwischen den beiden Förderrädern nahe dem einen, vorzugsweise dem deichselabgewandten Förderrad angeordnet ist. Hierdurch wird eine besonders einfache und dadurch kostengünstige Konstruktion mit günstiger Lastverteilung auf Achse und Deichsel erreicht.

Der kastenförmige Aufbau des erfindungsgemäßen Mischund Verteilwagens wird in vielen Einsatzfällen oben über den größten Teil seiner Länge offen bleiben können, wodurch vorteilhaft das Beladen vereinfacht wird. Es ist aber vorteilhaft, zumindest im Bereich oberhalb der Mischwelle mit den Mischflügeln eine entfernbare Abdeckung anzubringen, um beim Mischen ein Herauswerfen von Futter zu vermeiden.

Zweckmäßig ist vorgesehen, daß die Kette in Längsrichtung des Misch- und Verteilwagens durch eine Spannvorrichtung vorspannbar ist, wobei die Spannvorrichtung vorzugsweise mindestens eine mechanische oder pneumatische oder. hydraulische Feder aufweist und bevorzugt geschützt unter dem Boden angeordnet ist.

Die Mitnehmer weisen aus Stabilitätsgründen zweckmäßig jeweils ein im Querschnitt winkel- oder U-förmiges Profil auf und tragen an ihren Enden elastisch-flexible Abstreifer, vorzugsweise aus Gummi.

Damit an den Mitnehmern kein Futter hängen bleibt, sind zweckmäßig auf dem Boden mehrere Abstreifleisten zum streifenden Eingriff mit den Mitnehmern angeordnet und ist die Öffnung in ihrem Randbereich innenseitig als Scherkante ausgebildet.

Zur zusätzlichen Unterstützung des zuvor beschriebenen Abstreifens von Futter von den Mitnehmern ist weiterhin vorgesehen, daß die auf dem Boden vorgesehenen Abstreifleisten in Bewegungsrichtung des Förderstranges betrachtet von der Kette aus schräg nach außen weisen. Auf diese Weise wird von den Mitnehmern gegebenenfalls mitgeschlepptes langfaseriges Futter entlang der Mitnehmer nach außen bewegt, bis es über die Spitze der Mitnehmer rutscht und so von diesen loskommt.

Gemäß Anspruch 29 ist speziell im Bereich des Bodens innenseitig von der Öffnung mindestens eine gekrümmt verlaufende Abstreifleiste vorgesehen, die tangential an die wandabgewandte Begrenzung der Öffnung läuft. Diese Abstreifleiste unterstützt den Abstreifeffekt, wie er schon im Zusammenhang mit dem Anspruch 22 erläutert wurde.

Da die Abstreifleisten ein Verschleißteil darstellen, bestehen diese bevorzugt aus Metall oder Kunststoff und sind zweckmäßig auswechselbar auf dem Boden angebracht.

Zwei alternative Ausführungen des Misch- und Verteilwagens hinsichtlich der Anordnung der Öffnung für den Austrag des gemischten Futters sind gemäß Anspruch 31 dadurch gekennzeichnet, daß zusätzlich zu oder anstatt der im Boden unter der Mischwelle vorgesehenen verschließbaren Öffnung eine verschließbare Öffnung nahe der entgegengesetzen, mischwellenfernen Stirnwand des Aufbaus vorgesehen ist.

Ausführungsbeispiele der Erfindung werden nunmehr anhand einer Zeichnung erläutert. Die Figuren der Zeichnung zeigen
- Figur 1: einen Misch- und Verteilwagen in einer schematischen Seitenansicht,
- Figur 2: eine schematische Draufsicht auf die Oberseite des Bodens des Wagens aus Figur 1,
- Figur 3: einen zweiten Misch- und Verteilwagen im Querschnitt und
- Figur 4: eine Draufsicht auf den Boden des Misch- und Verteilwagens aus Figur 3 in dessen vorderem Teil.

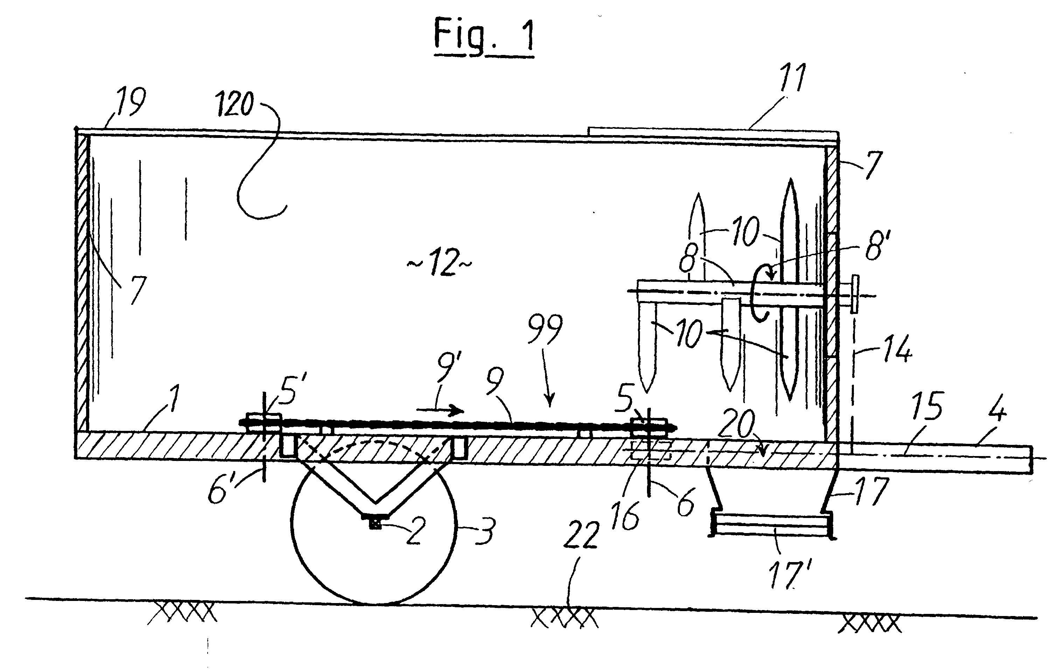

Mit Bezugnahme auf Figur 1 ist ein Misch- und Verteilwagen dargestellt, der einen kastenförmigen Aufbau 12 mit einem ebenen Boden 1 mit runden Enden aufweist. In Höhe des Boden 1 ragt in der Figur 1 nach rechts eine Deichsel 4 zur Verbindung mit einem Zugfahrzeug vor.

Der kastenförmige Aufbau 12 auf dem Boden 1 ist am deichselseitigen Ende durch eine in Draufsicht halbkreisförmig gebogene Stirnwand 7 und gegenüber am anderen Ende durch eine gleiche, spiegelsymmetrische Stirnwand 7' begrenzt.

Die beiden Stirnwände 7, 7' sind durch zwei Längswände 120 verbunden, wobei in dem gezeigten Ausführungsbeispiel die vordere Längswand weggelassen ist, um den Blick in das Innere des Aufbaus 12 zu ermöglichen.

Zwischen dem Boden 1 und der als waagerechten Linie dargestellten Fahrbahn 22 sind zwei Räder 3 angeordnet, die auf einer Achse 2 drehbar gelagert sind, die an der Unterseite des Bodens 1 befestigt ist.

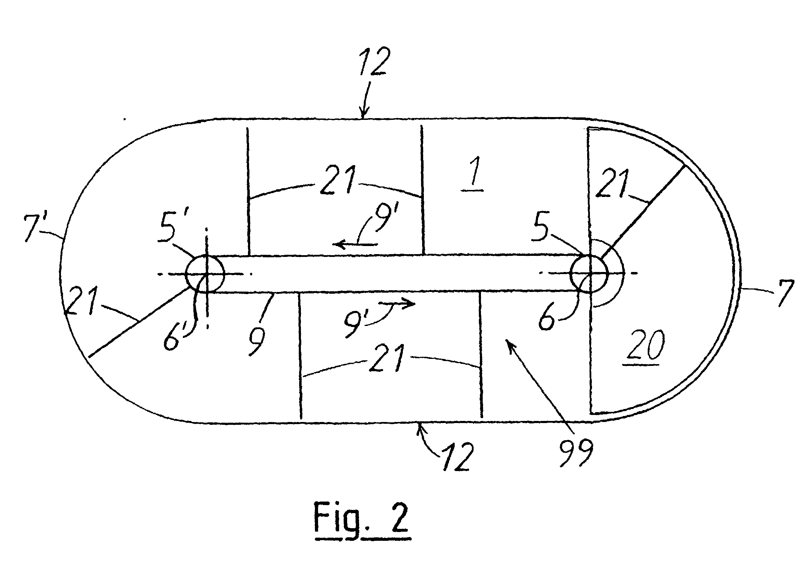

Auf der Oberseite des Bodens 1 ist ein Förderstrang 99 in Form eines Kettenförderers angeordnet, der aus einer Kette 9 besteht und sich in Pfeilrichtung 9' bewegt. Dieser Kettenförderer ist ein Endlos-Kettenförderer und läuft um zwei beabstandete Förderräder 5' und 5 um, deren Drehachsen 6' und 6 senkrecht zum Boden 1 verlaufen. Der Kettenförderer 9 weist Mitnehmer auf, die später anhand von Figur 2 noch erläutert werden.

Das deichselseitige Förderrad 5 ist über ein Winkelgetriebe 16, welches im Bereich unter dem Boden 1 angeordnet ist, mit einer horizontalen Welle 15 verbunden, die von dort zum freien Ende der Deichsel 4 führt. Hier trägt die Welle 15 eine nicht gezeichnete Kupplung zur Verbindung mit einer Zapfwelle eines Zugfahrzeuges.

Weiter trägt die Welle 15 ein Kettenrad (nicht gezeichnet), das über einen Kettentrieb 14 zu einer darüber angeordneten, in der Stirnwand 7 gelagerten und etwa horizontalen Mischwelle 8 führt, die in Pfeilrichtung 8' drehbar ist, wobei der Kettentrieb 14 außerhalb der deichselseitigen Stirnwand 7 angeordnet ist.

Der in den kastenförmigen Aufbau 12 ragende Teil der Mischwelle 8 trägt mehrere regelmäßig voneinander beabstandete Mischflügel 10, die senkrecht von der Mischwelle 8 abstehen. Die Enden der Mischflügel 10 sind vorn zinkenartig zugespitzt.

Unterhalb dieser Anordnung von Mischflügeln 10 ist eine Öffnung 20 im Boden 1 des kastenförmigen Aufbaus 12 angeordnet. Unterhalb der Öffnung 20, die durch einen formangepaßten Schieber stufenlos freigebbar und verschließbar ist, ist ein sich verjüngender, trichterartiger Ansatz 17 vorhanden. Unter diesem verläuft ein Querförderband 17' zum seitlichen Austragen des Futters.

Der kastenförmige Aufbau 12 ist innen glatt und oben mit einem verstärkten Rand 19 versehen. Oberhalb der Mischwelle 8 mit ihren Mischflügeln 10 ist eine entfernbare Abdeckung 11, z.B. ein Gitter oder Netz, angeordnet, um einen Auswurf von Futter durch die Mischflügel 10 zu verhindern.

Figur 2 zeigt in Draufsicht den Boden 1, wobei alle Teile fortgelassen sind, die die Übersicht beeinträchtigen, insbesondere die Welle 8 mit den Flügeln 10. Rechts im Bereich des Bodens 1, der halbkreisförmige Enden aufweist, befindet sich eine halbkreisförmige Öffnung 20, die nahe an die Stirnwand 7 heranreicht. Ein die Öffnung 20 verschließender Schieber ist nicht gezeigt.

Es sind weiter die beiden Förderräder 5 und 5' dargestellt, um die herum die Kette 9 des Kettenförderers in Pfeilrichtung 9' umläuft, wenn der Antrieb über die Welle 15 eingeschaltet ist. An der Kette 9 sind die Mitnehmer 21 in gleichmäßigen Abständen so befestigt, daß sie um die Förderräder 5, 5' umlaufen können und gleichzeitig so weit wie möglich nach außen wegragen.

Die Mitnehmer 21 können aus Winkel- oder U-Profilen gebildet sein.

Die Länge der Mitnehmer 21 und die Außenkontur des Bodens 1 sind so bemessen, daß die Mitnehmer 21 bei ihrer Bewegung praktisch den gesamten Bereich des Bodens 1 überstreichen.

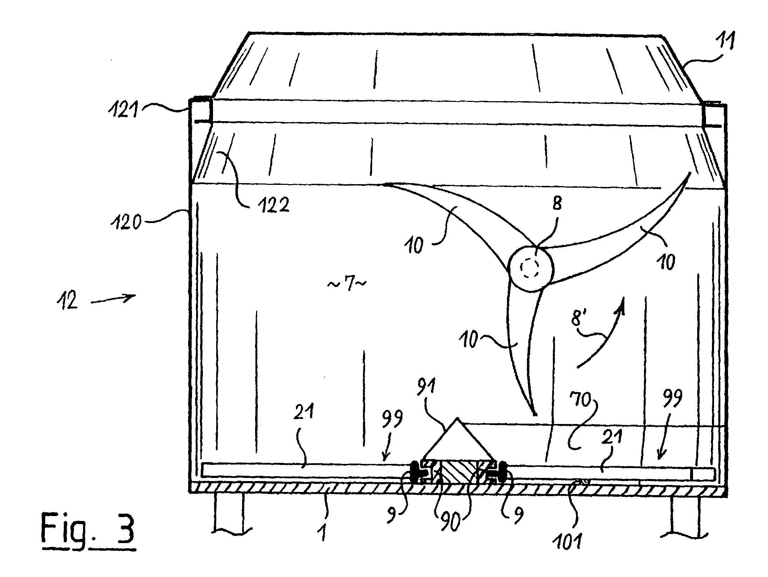

Figur 3 der Zeichnung zeigt einen zweiten Misch- und Verteilwagen im Querschnitt durch seinen Aufbau 12, wobei hier ein unter dem Aufbau 12 vorhandenes Fahrwerk nicht dargestellt ist. Der Aufbau 12 besteht im wesentlichen aus dem ebenen Boden 1, von dessen äußerem Rand aus sich eine Blechwand 120 nach oben erstreckt. An ihrem oberen Rand 121 ist die Blechwand 120 durch dreifaches Abkanten nach innen zu einem stabilen, jedoch nach außen nicht auftragenden Versteifungsrand umgeformt. Oben auf dem Aufbau 12 sitzt eine Abdeckung 11, die zumindest über den vorderen Teil des Aufbaus 12, der in Figur 3 dargestellt ist, reicht.

An der im Hintergrund sichtbaren, halbkreisförmig verlaufenden vorderen Stirnwand 7 des Aufbaus 12 ist die Mischwelle 8 gelagert, die etwa horizontal verläuft und in das Innere des Aufbaus 12 ragt. Wie die Figur 3 verdeutlicht, ist hier die Mischwelle 8 seitwärts nach rechts aus der Längsmitte des Misch- und Verteilwagens versetzt angeordnet. An der Mischwelle 8 sind beim dargestellten Ausführungsbeispiel drei Mischflügel 10 angebracht, die jeweils sichelförmig gebogen und zugespitzt sind. Die drei Mischflügel 10 besitzen unterschiedliche Längen, wobei die Länge des längsten Mischflügels 10 so gewählt ist, daß dessen Spitze bei Drehung der Welle 8 in Richtung des Drehpfeiles 8' knapp an den inneren Flächen des Aufbaus 12 vorbeiläuft, ohne diese zu berühren. Die Mischflügel 10 sind hintereinander auf der Mischwelle 8 mit einem axialen Abstand angeordnet, wobei der kürzeste Mischflügel 10 am weitesten von der Stirnwand 7 entfernt angeordnet ist; der zweitlängste Mischflügel 10 folgt danach und schließlich ist der längste Mischflügel 10 am nächsten an der Stirnwand 7 angebracht. In Umfangsrichtung der Mischwelle 8 betrachtet sind die drei Mischflügel 10 in einem gleichmäßigen Abstand von je 120° angeordnet.

Oberhalb des Bodens 1 verläuft knapp über diesem der umlaufende Förderstrang 99, der auch hier durch eine umlaufende Kette 9 gebildet ist, an der in regelmäßigen Abständen nach außen laufende Mitnehmer 21 angebracht sind. Von oben gesehen läuft die Kette 9 entgegen dem Uhrzeigersinn um, so daß sich die Mitnehmer 21 in der linken Hälfte des Aufbaus 12 auf den Betrachter zu und in der rechten Hälfte des Aufbaus 12 vom Betrachter weg bewegen.

In der Längsmitte des Bodens 1 sind parallel zueinander zwei C-förmige, zur Kette 9 hin offene Gleitschienen 90 angebracht, die vorzugsweise aus einem verschleißfesten, reibungsarmen Kunststoff bestehen.

Oberhalb der Gleitschienen 90 ist eine im Querschnitt dachförmige Abdeckung 91 angebracht, die für eine Ableitung von im Aufbau 12 bewegtem Futter nach links und rechts in den Bereich der Mitnehmer 21 sorgt.

Unter dem in Figur 3 rechts eingezeichneten Mitnehmer 21 ist eine von mehreren Abstreifleisten 101 dargestellt, die von der Kette 9 ausgehend schräg nach außen verlaufen und dazu dienen, von den Mitnehmern 21 transportiertes Futter, insbesondere langfaseriges Material, zum äußeren Ende der Mitnehmer 21 zu bewegen und von diesen abzustreifen.

Im Betrieb des Misch- und Verteilwagens werden die Kette 9 und die Mischwelle 8 in Bewegung versetzt, so daß von den Mitnehmern 21 in den Bereich der Mischflügel 10 transportiertes Futter von letzteren angehoben, zerkleinert und intensiv vermischt wird. Um Toträume im Wirkungsbereich der Mischflügel 10 zu vermeiden, ist in der in Figur 1 rechten unteren Übergangszone von der Stirnwand 7 zum Boden 1 ein Leitblech 70 angebracht, das den Übergangsbereich vom Boden 1 zur Stirnwand 7 abschrägt und somit tote Winkel vermeidet.

In ähnlicher Weise ist unterhalb des abgekanteten oberen Randes 121 der Blechwände 120 ein umlaufendes Schrägblech 122 angebracht, das Ecken und Staumöglichkeiten für das nach oben bewegte Futter ausschließt.

Schließlich ist auch die Abdeckung 11 mit einer schrägen Seitenfläche ausgebildet, um einen Stau von Futter, das von den Mischflügeln 10 nach oben gewegt wird, sicher auszuschließen.

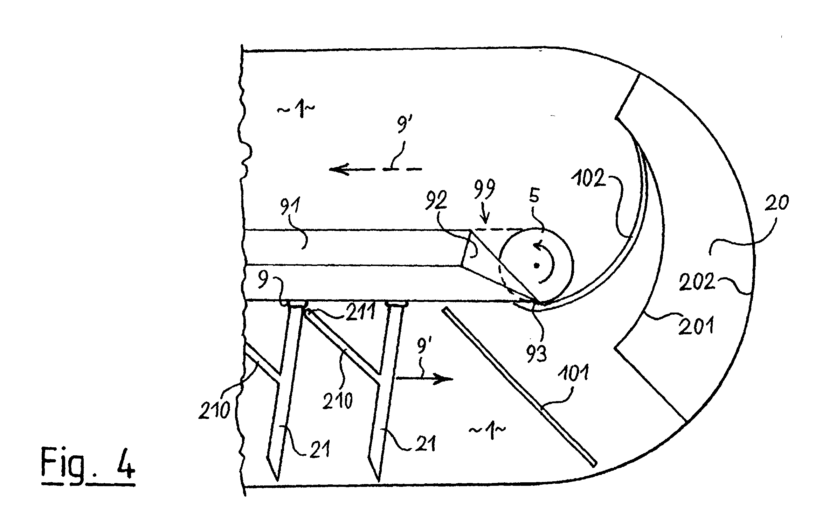

Figur 4 der Zeichnung zeigt den vorderen Bereich des Bodens 1 des Wagens aus Figur 3 in einer Draufsicht, wobei die Wände 120, die Stirnwand 7 und die daran gelagerte Mischwelle 8 mit den Mischflügeln 10 nicht sichtbar sind.

Unten links in Figur 4 sind zwei der regelmäßig voneinander beabstandeten, über den gesamten Boden 1 vorgesehenen Mitnehmer 21 eingezeichnet, die an ihrem inneren Ende mit der Kette 9 verbunden, beispielsweise verschweißt sind. Jeder Mitnehmer 21 besitzt an seiner Rückseite eine Diagonalstütze 210, deren Fußende 211 lose an dem nachfolgenden Mitnehmer 21 an dessen Fußende nahe der Kette 9 abgestützt ist. An der Unterseite der Mitnehmer 21 und der Diagonalstützen 210 können, was hier nicht sichtbar ist, Kunststoffauflagen angebracht sein, um die Reibung und den Verschleiß zu vermindern.

Durch die Bewegungspfeile 9' ist die Förderrichtung des Förderstranges 99 dargestellt, wobei aus Übersichtlichkeitsgründen die selbstverständlich vorhandenen weiteren Mitnehmer 21 nicht eingezeichnet sind.

Zum Antrieb des Förderstranges 99 aus Kette 9 und Mitnehmern 21 dient das Förderrad 5, das von unten her durch nicht sichtbare Antriebsmittel in Drehung versetzbar ist.

In der Längsmitte des Bodens 1 ist von oben die dachförmige Abdeckung 91 sichtbar, die im Bereich des Förderrades 5 endet. Die Abdeckung 91 ist hier mit einer Schräge 92 abgeschlossen. Die Richtung der Schräge 92 ist dabei so gewählt, daß die Spitze 93 der Abdeckung 91 an der Zulaufseite des Förderstranges 99, also in Figur 4 unten, liegt. Hierdurch wird eine staufreie Umlenkung von im Misch- und Verteilwagen gefördertem Futter im Bereich des Förderrades 5 gewährleistet.

Weiterhin zeigt die Figur 4 ganz rechts im Bereich der halbkreisförmigen Stirnseite des Bodens 1 die Öffnung 20, die zum Auswurf von fertig gemischtem Futter nach unten auf ein darunter vorgesehenes, hier nicht dargestelltes Querförderband dient. Die Öffnung 20 ist mittels eines flachen, unterhalb des Bodens 1 angebrachten Schiebers verschließbar und nach Bedarf mehr oder weniger vollständig freigebbar, wobei der Schieber hier ebenfalls nicht dargestellt ist. Der Schieber ist in Längsrichtung des Bodens 1 bewegbar, wozu vorzugsweise eine hydraulische Kolben-Zylinder-Anordnung eingesetzt wird.

Schließlich zeigt die Figur 4 noch zwei Abstreifleisten 101, 102, die auf dem Boden 1 angebracht sind. Die erste Abstreifleiste 101 verläuft geradlinig von der Kette 9 ausgehend in Bewegungsrichtung 9' des Förderstranges 99 betrachtet schräg nach außen, um an den Mitnehmern 21 haftendes Futter nach außen von den Mitnehmern 21 abzustreifen. Dem gleichen Zweck dient die Abstreifleiste 102, die im Bereich des Bodens 1 zwischen dem Förderrad 5 und der inneren Begrenzung 201 der Öffnung 20 angebracht ist und gekrümmt verläuft.

Ebenfalls zum Zweck des Abstreifens von Futter von den Mitnehmern 21 ist die innere Begrenzung 201 der Öffnung 20 so ausgeführt, daß sie in Bewegungsrichtung 9' betrachtet stetig näher an die äußere Begrenzung 202 der Öffnung 20 heranläuft. Die innere Begrenzung 201 der Öffnung 20 wirkt so als Abstreif- oder Scherkante für von den Mitnehmern 21 herangebrachtes Futter, wenn die Öffnung 20 freigegeben ist und das Futter nach unten abgeworfen werden soll.

Statt wie in Figur 4 gezeigt, kann alternativ der Mischund Verteilwagen nur an seinem entgegengesetzten Ende oder an beiden Ende mit einer verschließbaren Öffnung versehen sein.

## Patentansprüche

1. Misch- und Verteilwagen für Futter, mit einem kastenförmigen Aufbau (12) mit einem ebenen Boden (1), mit einem Fahrwerk (2) mit Rädern (3) und mit entweder einer Deichsel (4) zur lösbaren Verbindung mit einem Zugfahrzeug, insbesondere einem Traktor, oder einer eigenen Antriebseinheit, wobei auf der Oberseite des Bodens (1) parallel zu diesem ein Förderstrang (99) angeordnet ist, der um zwei in Längsrichtung des Misch- und Verteilwagens voneinander beabstandete Förderräder (5, 5') Drehachsen (6, 6') umläuft, wobei mindestens eines der Förderräder (5, 5') drehantreibbar ist und wobei
eine drehantreibbare, etwa horizontale Mischwelle (8) vorhanden ist, die mindestens einen Mischflügel (10) trägt, und
unter der Mischwelle (8) im Boden (1) eine Öffnung (20) angeordnet ist **dadurch gekennzeichnet, daß** die Drehachsen (6,6') der Förderräder (5,5') senkrecht zum Boden (1) verlaufen und daß die Mischwelle (8) an einer der beiden Stirnwände (7,7') des kastenförmigen Aufbaus (12) gelagert ist und der Mischflügel (10) von einem in den Aufbau ragenden Teil der Mischwelle (8) getragen wird daß die Öffnung (20) verschließbar ist.

2. Misch- und Verteilwagen nach Anspruch 1, **dadurch gekennzeichnet, daß** der Aufbau (12) Blechwände (120) umfaßt, die an ihrem oberen Rand (121) zumindest in geraden Wandbereichen ein- oder mehrfach zum Aufbauinneren hin abgekantet sind.

3. Misch- und Verteilwagen nach Anspruch 2, **dadurch gekennzeichnet, daß** innenseitig am oberen Rand der Blechwände (120) zumindest im Bereich der Aufbau-Stirnseiten schrägstehende Verkleidungsbleche (122) zwischen der Innenkante der Abkantung(en) und der Wandinnenfläche angebracht sind.

4. Misch- und Verteilwagen nach einem der vorhergehenden Ansprüche, **dadurch gekennzeichnet, daß** die Mischwelle (8) aus der Quermitte der Stirnwand (7) heraus in einer Richtung entgegen der Förderrichtung (9') des Förderstranges (99) seitwärts versetzt angeordnet ist.

5. Misch- und Verteilwagen nach einem der vorhergehenden Ansprüche, **dadurch gekennzeichnet, daß** der Förderstrang (99) ein Kettenförderer mit einer Kette (9) ist, zwischen oder an deren Gliedern mehrere voneinander beabstandete, quer oder schräg zur Förderrichtung (9') nach außen weisende Mitnehmer (21) angeordnet sind, die beim Umlauf der Kette (9) die Oberseite des Bodens (1) zum größten Teil überstreichen.

6. Misch- und Verteilwagen nach Anspruch 5, **dadurch gekennzeichnet, daß** an jedem Mitnehmer (21) rückseitig eine Diagonalstütze (210) angebracht ist, deren Fußende (211) zumindest in den zwischen den Förderrädern (5, 5') liegenden Förderstrangbereichen am Verbindungspunkt zwischen der Kette (9) und dem nachfolgenden Mitnehmer (21) lose abgestützt ist.

7. Misch- und Verteilwagen nach Anspruch 5 oder 6, **dadurch gekennzeichnet, daß** die Mitnehmer (21) und gegebenenfalls deren Diagonalstützen (210) unterseitig eine auswechselbare Gleitauflage aus Kunststoff aufweisen.

8. Misch- und Verteilwagen nach einem der Ansprüche 5 bis 7, **dadurch gekennzeichnet, daß** die Kette (9) zwischen den Förderrädern (5, 5') in einer zu den Mitnehmern (21) hin offenen Gleitschiene (90) geführt ist.

9. Misch- und Verteilwagen nach Anspruch 8, **dadurch gekennzeichnet, daß** die Gleitschiene (90) ein C-Profil aus Kunststoff oder Holz oder ein mit Kunststoff oder Holz belegtes C-Profil ist.

10. Misch- und Verteilwagen nach einem der Ansprüche 5 bis 9, **dadurch gekennzeichnet, daß** der vorlaufende und der rücklaufende Abschnitt der Kette (9) parallel zueinander längs der Mitte des Bodens (1) verlaufen und einen Abstand voneinander aufweisen, der maximal ¼ der Breite des Bodens (1) beträgt.

11. Misch- und Verteilwagen nach Anspruch 10, **dadurch gekennzeichnet, daß** über den beiden Abschnitten der Kette (9) eine gemeinsame, im Querschnitt dachförmige Abdeckung (91) angebracht ist.

12. Misch- und Verteilwagen nach Anspruch 11, **dadurch gekennzeichnet, daß** die Abdeckung (91) an ihren nahe oder über den Förderrädern (5, 5') liegenden Enden je einen schrägen Abschluß (92) aufweist, wobei die Spitze (93) der Schräge an der Zulaufseite des Förderstranges (99) liegt.

13. Misch- und Verteilwagen nach einem der vorhergehenden Ansprüche, **dadurch gekennzeichnet, daß** an dem in den Aufbau (12) ragenden Teil der Mischwelle (8) mehrere regelmäßig beabstandete, senkrecht zur Mischwelle (8) stehende Mischflügel (10) angeordnet sind, die bei Drehung der Mischwelle (8) nahe am Boden (1) entlangstreichen.

14. Misch- und Verteilwagen nach Anspruch 13, **dadurch gekennzeichnet, daß** die Mischwelle (8) mit ihrem freien Ende bis in den Bereich nahe über dem benachbarten Förderrad (5) reicht und daß in Mischwellenrichtung betrachtet der äußere Mischflügel (10) über dem Förderrad (5) umläuft.

15. Misch- und Verteilwagen nach Anspruch 13 oder 14, **dadurch gekennzeichnet, daß** mindestens drei in Umfangsrichtung der Mischwelle (8) gleichmäßig versetzte Mischflügel (10) unterschiedlicher Länge vorgesehen sind.

16. Misch- und Verteilwagen nach einem der Ansprüche 13 bis 15, **dadurch gekennzeichnet, daß** die Länge der Mischflügel (10) vom freien Ende der Mischwelle (8) zur diese tragenden Stirnwand (7) hin zunimmt.

17. Misch- und Verteilwagen nach einem der Ansprüche 13 bis 16, **dadurch gekennzeichnet, daß** die Mischflügel (10) sichelförmig gekrümmt und zugespitzt sind, wobei die Krümmung in Drehrichtung (8') der Mischwelle (8) weist.

18. Misch- und Verteilwagen nach einem der Ansprüche 13 bis 17, **dadurch gekennzeichnet, daß** der Übergang vom Boden (1) zu der die Mischwelle (8) tragenden Stirnwand (7) zumindest im Wirkungsbereich der Mischflügel (10) abgeschrägt oder ausgerundet ist.

19. Misch- und Verteilwagen nach einem der Ansprüche 13 bis 18, **dadurch gekennzeichnet, daß** die Bewegung des Förderstranges (99) und die Drehung der Mischwelle (8) in einem solchen Verhältnis erfolgen, daß bei Bewegung des Förderstranges (99) um einen Mitnehmerabstand die Mischwelle (8) eine ganze Umdrehung oder mehr ausführt.

20. Misch- und Verteilwagen nach einem der vorhergehenden Ansprüche, **dadurch gekennzeichnet, daß** die Mischwelle (8) über einen Kettentrieb (14) von einer weiteren, etwa horizontalen Welle (15) drehbar ist, die etwa in der Längsmittelachse des Bodens (1) des kastenförmigen Aufbaus (12) unterhalb der Förderräder (5, 5') verläuft, wobei die weitere Welle (15) an ihrem einen Ende über ein Winkelgetriebe (16) mit einem der Förderräder (5, 5') gekoppelt ist und an ihrem anderen Ende entweder eine Kupplung trägt, die mit einer Zapfwelle eines Zugfahrzeugs, insbesondere Traktors, verbindbar ist oder unmittelbar mit der eigenen Antriebseinheit des Wagens verbunden ist.

21. Misch- und Verteilwagen nach einem der vorhergehenden Ansprüche, **dadurch gekennzeichnet, daß** die beiden Stirnwände (7, 7') jeweils einen halbkreisförmigen Grundriß aufweisen, daß die verschließbare Öffnung (20) im Boden (1) etwa halbkreisförmig parallel zur einen Stirnwand (7) verläuft und daß die Öffnung (20) durch einen formangepaßten Schieber verschließbar und stufenlos freigebbar ist.

22. Misch- und Verteilwagen nach Anspruch 21, **dadurch gekennzeichnet, daß** die wandabgewandte Begrenzung (201) der Öffnung (20) in Bewegungsrichtung (9') des Förderstranges (99) betrachtet stetig näher an die wandnahe Begrenzung (202) der Öffnung (20) heranläuft.

23. Misch- und Verteilwagen nach einem der vorhergehenden Ansprüche, **dadurch gekennzeichnet, daß** eine Achse (2) mit zwei Rädern (3) vorhanden ist, die unter dem Boden (1) zwischen den beiden Förderrädern (5, 5') nahe dem einen Förderrad (5') angeordnet ist.

24. Misch- und Verteilwagen nach einem der vorhergehenden Ansprüche, **dadurch gekennzeichnet, daß** der kastenförmige Aufbau (12) oben zumindest im Bereich oberhalb der Mischwelle (8) eine entfernbare Abdeckung (11) aufweist.

25. Misch- und Verteilwagen nach einem der vorhergehenden Ansprüche, **dadurch gekennzeichnet, daß** die Kette (9) in Längsrichtung des Misch- und Verteilwagens durch eine Spannvorrichtung vorspannbar ist, wobei die Spannvorrichtung mindestens eine mechanische oder pneumatische oder hydraulische Feder aufweist.

26. Misch- und Verteilwagen nach einem der Ansprüche 5 bis 25, **dadurch gekennzeichnet, daß** die Mitnehmer (21) jeweils ein im Querschnitt winkel- oder U-förmiges Profil aufweisen und/oder an ihren Enden elastisch-flexible Abstreifer, vorzugsweise aus Gummi, tragen.

27. Misch- und Verteilwagen nach einem der Ansprüche 5 bis 26, **dadurch gekennzeichnet, daß** auf dem Boden (1) mehrere Abstreifleisten (101, 102) zum streifenden Eingriff mit den Mitnehmern (21) angeordnet sind und/oder daß die Öffnung (20) in ihrem Randbereich innenseitig als Scherkante ausgebildet ist.

28. Misch- und Verteilwagen nach Anspruch 27, **dadurch gekennzeichnet, daß** die Abstreifleisten (101, 102) in Bewegungsrichtung (9') des Förderstranges (99) betrachtet von der Kette (9) aus schräg nach außen weisen.

29. Misch- und Verteilwagen nach Anspruch 27 oder 28, **dadurch gekennzeichnet, daß** im Bereich des Bodens (1) innenseitig von der Öffnung (20) mindestens eine gekrümmt verlaufende Abstreifleiste (102) vorgesehen ist, die tangential an die wandabgewandte Begrenzung (201) der Öffnung (20) läuft.

30. Misch- und Verteilwagen nach Anspruch 27 oder 28 oder 29, **dadurch gekennzeichnet, daß** die Abstreifleisten (101, 102) aus Metall oder Kunststoff bestehen und auswechselbar auf dem Boden (1) angebracht sind.

31. Misch- und Verteilwagen nach einem der vorhergehenden Ansprüche, **dadurch gekennzeichnet, daß** zusätzlich zu oder anstatt der im Boden (1) unter der Mischwelle (8) vorgesehenen verschließbaren Öffnung (20) eine verschließbare Öffnung nahe der entgegengesetzten, mischwellenfernen Stirnwand (7') des Aufbaus (12) vorgesehen ist.

## Claims

1. Wagon for distributing and mixing animal feed comprising a box-shaped body (12) with a level floor (1), a running gear (2) with wheels (3) and either a draw-bar (4) for the establishment of a detachable connection to a pulling unit, especially a tractor, or its own driving unit, wherein
a conveyor belt (99) is arranged on the upper side of and parallel to the floor (1), said conveyor belt (99) revolving around two conveyor wheels (5, 5') with rotational axes (6, 6') which are arranged at a distance from each other and of which at least one can be driven to rotate, and wherein a mixing shaft (8) is provided in an approximately horizontal arrangement which can be driven to rotate and carries at least one mixing fin (10), and an opening (20) is provided in the floor (1) underneath the mixing shaft (8),
**characterised in that**
the rotational axes (6, 6') of the conveyor wheels (5, 5') extend orthogonal to the floor (1) and **in that** the mixing shaft (8) is run on bearings on one of the front faces (7, 7') of the box-shaped body, and the mixing fin (10) is supported by a part of the mixing shaft (8) protruding into the body, and **in that** the opening (20) is closable.

2. Wagon for distributing and mixing according to Claim 1, **characterised in that** the body (12) comprises sheet metal walls (120) which, on their upper edge (121), are folded singly or multiply towards the interior of the body at least in straight sections of the wall.

3. Wagon for distributing and mixing according to Claim 2, **characterised in that**, on the inside of the upper edge of the sheet metal walls (120), coating sheets (122) extending at an oblique angle are arranged between the inner edge(s) of the folded sheets and the surface of the inner wall at least in the area of the front faces of the body.

4. Wagon for distributing and mixing according to anyone of the preceding claims, **characterised in that** the mixing shaft (8) is arranged to protrude from the transverse middle of the front face (7) in a direction opposite to the conveying direction (9') of conveyor belt (99) with some lateral displacement.

5. Wagon for distributing and mixing according to anyone of the preceding claims, **characterised in that** the conveyor belt (99) comprises a chain conveyor with a chain (9) with several pushers (21), which are arranged in between or on the members of said chain and extend in a transverse or oblique direction with respect to the conveying direction (9') and point outwards, such that the pushers pass along most of the upper surface of the floor (1) when the chain (9) travels on its rotary motion.

6. Wagon for distributing and mixing according to Claim 5, **characterised in that** the back of each pusher (21) is fitted with a diagonal support (210), the foot (211) of which is loosely supported, at least in the conveyor belt areas between the conveyor wheels (5, 5'), at the point connecting the chain (9) and the subsequent pusher (21).

7. Wagon for distributing and mixing according to Claim 5 or 6, **characterised in that** the pushers (21) and possibly their diagonal supports (210) are fitted on their undersides with a replaceable sliding lining made of plastic.

8. Wagon for distributing and mixing according to anyone of the Claims 5 through 7, **characterised in that**, in the area between the conveyor wheels (5, 5'), the chain (9) is guided in a sliding track (90) that opens towards the pushers (210).

9. Wagon for distributing and mixing according to Claim 8, **characterised in that** the sliding track (90) comprises a C-profile made of wood or plastic or a C-profile lined with wood or plastic.

10. Wagon for distributing and mixing according to anyone of the Claims 5 through 9, **characterised in that** the forward and the backward travelling sections of the chain (9) travel parallel to each other along the middle of the floor (1) and are arranged at a distance of no more than ¼ of the width of the floor (1).

11. Wagon for distributing and mixing according to Claim 10, **characterised in that** a common cover (91) with a roof-like cross-section is provided above the two sections of the chain (9).

12. Wagon for distributing and mixing according to Claim 11, **characterised in that** the cover (91) is fitted with an oblique termination (92) each at its ends near or above the conveyor wheels (5, 5 ') with the tip (93) of the oblique terminations contacting the feed side of the conveyor belt (99).

13. Wagon for distributing and mixing according to anyone of the preceding claims, **characterised in that** the part of the mixing shaft (8) protruding into the body (12) is fitted with several mixing fins (10) which are arranged at a regular distance from each other and orthogonal to the mixing shaft (8) and pass close to the floor (1) when the mixing shaft (8) travels on its rotary motion.

14. Wagon for distributing and mixing according to Claim 13, **characterised in that** the free end of the mixing shaft (8) extends into the area close to the neighbouring conveyor wheel (5) and **in that**, seen in the direction of the mixing shaft (8), the external mixing fin (10) travels around the conveyor wheel (5).

15. Wagon for distributing and mixing according to Claim 13 or 14, **characterised in that** at least three differently-sized mixing fins (10) arranged at regular distances in the direction of the circumference of the mixing shaft (8) are provided.

16. Wagon for distributing and mixing according to anyone of the Claims 13 through 15, **characterised in that** the length of the mixing fins (10) increases between the free end of the mixing shaft (8) and the front wall (7) supporting the mixing shaft (8).

17. Wagon for distributing and mixing according to anyone of the Claims 13 through 16, **characterised in that** the mixing fins (10) are of a sickle-like curved and pointed shape with the curvature being in the direction of rotation (8') of the mixing shaft (8).

18. Wagon for distributing and mixing according to anyone of the Claims 13 through 17, **characterised in that** the transition between the floor (1) and the front wall (7) supporting the mixing shaft (8) is bevelled or curved at least in the area of action of the mixing fins (10).

19. Wagon for distributing and mixing according to anyone of the Claims 13 through 18, **characterised in that** the motion of the conveyor belt (99) and the rotation of the mixing shaft (8) are co-ordinated such that the mixing shaft (8) performs a full rotation or more every time the conveyor belt (99) advances by the distance corresponding to the distance between two adjacent pushers.

20. Wagon for distributing and mixing according to anyone of the preceding claims, **characterised in that** the mixing shaft (8) can be driven, mediated through a chain drive (14), by an additional horizontal shaft (15) extending approximately in the longitudinal middle axis of the floor (1) of the body (12) below the conveyor wheels (5, 5'), wherein one end of the additional horizontal shaft (15) is coupled by an angular gear (16) to one of the conveyor wheels (5, 5') and the other end either supports a coupling that can be connected to a power take-off shaft of a pulling unit, especially a tractor, or is connected directly to the driving unit of the cart.

21. Wagon for distributing and mixing according to anyone of the preceding claims, **characterised in that** the two front walls (7,7 ') each have a semi-circular horizontal projection, and **in that** the closable opening (20) in the floor (1) is approximately semi-circular in shape and extends parallel to one of the front walls (7), and **in that** the opening (20) can be closed and continuously adjusted in size by a slider of appropriate shape.

22. Wagon for distributing and mixing according to Claim 21, **characterised in that**, seen in the direction of motion (9') of the conveyor belt (99), the limit (201) of the opening (20) facing away from the wall continuously approaches the limit (202) of the opening (20) close to the wall.

23. Wagon for distributing and mixing according to anyone of the preceding claims, **characterised in that** an axis (2) with two wheels (3) is provided, which is arranged underneath the floor (1) between the two conveyor wheels (5, 5') close to one of the conveyor wheels (5').

24. Wagon for distributing and mixing according to anyone of the preceding claims, **characterised in that** the upper side of the box-shaped body (12) is fitted with a removable cover (11) at least in the area above the mixing shaft (8).

25. Wagon for distributing and mixing according to anyone of the preceding claims, **characterised in that** the chain (9) can be pre-tautened in the longitudinal direction of the wagon for distributing and mixing through a tautening device with the tautening device comprising at least one mechanical or pneumatic or hydraulic spring.

26. Wagon for distributing and mixing according to anyone of the Claims 5 through 25, **characterised in that** each of the pushers (21) has a profile with an angle- or U-shaped cross-section and/or bears at its end elastic-flexible strip-off elements, preferably made of rubber.

27. Wagon for distributing and mixing according to anyone of the Claims 5 through 26, **characterised in that** several strip-off ledges (101, 102) engaging the pushers (21) for the purpose of stripping-off are arranged on the floor (1) and/or **in that** the edge of the opening (20) on the inner side is provided as a shearing edge.

28. Wagon for distributing and mixing according to Claim 27, **characterised in that**, seen in the direction of motion (9') of the conveyor belt (99), the strip-off ledges (101, 102) point outwards at an oblique angle.

29. Wagon for distributing and mixing according to Claim 27 or 28, **characterised in that** at least one curved strip-off ledge (102) is provided in the area of the floor (1) on the inside of the opening (20), with said strip-off ledge (102) extending tangentially towards the limit (201) of the opening (20) facing away from the wall.

30. Wagon for distributing and mixing according to Claim 27 or 28 or 29, **characterised in that** the strip-off ledges (101, 102) consist of metal or plastic and are arranged on the floor (1) so as to be replaceable.

31. Wagon for distributing and mixing according to anyone of the preceding claims, **characterised in that**, in addition to or in place of the opening (20) provided in the floor (1) underneath the mixing shaft (8), a closable opening is provided near the opposite front wall (7') of the body (12) that is distant from the mixing shaft (8).

## Revendications

1. Véhicule de distribution et de mélange de fourrage avec une construction (12) en forme de caisse à fond (1) plan, avec un châssis (4) sur roues (3) et avec soit une barre d'attelage permettant la connexion amovible avec un véhicule tracteur, en particulier un tracteur agricole, ou sa propre unité motrice, étant donné que sur la partie supérieure du fond (1) est agencée, parallèlement à cette dernière, une ligne de transport (99) qui circule autour de deux roues de manutention (5, 5') écartées l'une de l'autre dans le sens longitudinal avec des axes de rotation (6, 6'), étant donné qu'au moins une des roues de manutention (5, 5') peut être entraînée par moteur vireur et étant donné qu'un arbre mélangeur (8) par exemple horizontal et pouvant être entraîné par moteur vireur portant au moins une aile de mélange (10) est raccordé et, qu'un orifice (20) se trouve au dessous de l'arbre mélangeur (8) dans le fond (1),
**caractérisé par le fait que** les axes de rotation (6, 6') des roues de manutention (5, 5') sont orientés perpendiculairement au fond et, que l'arbre mélangeur (8) est logée sur l'une des parois de bout (7, 7') de la construction (12) en forme de caisse et, que l'aile de mélange (10) est portée par une partie de l'arbre mélangeur (8) faisant saillie dans la construction et, que l'orifice (20) peut être fermé.

2. Véhicule de distribution et de mélange conformément à la revendication 1, **caractérisé par le fait que** la construction (12) comporte des parois en tôle (120) qui sont pliées sur leur bord supérieur (121) au moins aux parties droites de la paroi une ou plusieurs fois vers l'intérieur de la construction.

3. Véhicule de distribution et de mélange conformément à la revendication 2, **caractérisé par le fait que**, sur le côté intérieur du bord supérieur des parois de tôle (120), des tôles de revêtement (122) inclinées se trouvent au moins au niveau des parois de bout de la construction entre le bord intérieur du (des) pli(s) et la surface intérieure de la paroi.

4. Véhicule de distribution et de mélange conformément à l'une des revendications précédentes, **caractérisé par le fait que** l'arbre mélangeur (8) fait saillie du centre transversal de la paroi de bout (7), décalé sur le côté, dans un sens opposé au sens de transport (9') de la ligne de transport (99).

5. Véhicule de distribution et de mélange conformément à l'une des revendications précédentes, **caractérisé par le fait que** la ligne de transport (99) est un convoyeur à chaîne comportant une chaîne (9) entre ou sur les maillons desquels sont agencés, transversalement ou obliquement par rapport au sens de transport (9'), plusieurs tocs d'entraînement (21) écartés l'un de l'autre et orientés vers l'extérieur, lesquels tocs d'entraînement balaient la plus grande portion de la partie supérieure du fond (1) lors de la circulation de la chaîne (9).

6. Véhicule de distribution et de mélange conformément à la revendication 5, **caractérisé par le fait que**, à l'arrière de chaque toc d'entraînement (21), est installé un appui diagonal (210) dont l'extrémité de pied (211) est au moins appuyée de manière lâche au point de connexion situé entre la chaîne (9) et le toc d'entraînement (21) suivant aux niveaux de la ligne de transport se trouvant entre les roues de manutention (5, 5').

7. Véhicule de distribution et de mélange conformément à la revendication 5 ou 6, **caractérisé par le fait que** les tocs d'entraînement (21) et, le cas échéant, les appuis diagonaux (210) correspondants, comportent sur leur côté inférieur un revêtement glissant échangeable en matière plastique.

8. Véhicule de distribution et de mélange conformément à l'une des revendications 5 à 7, **caractérisé par le fait que** la chaîne (9) défile entre les roues de manutention (5, 5') dans une glissière (90) ouverte vers les tocs d'entraînement (21).

9. Véhicule de distribution et de mélange conformément à la revendication 8, **caractérisé par le fait que** la glissière (90) est un profilé en C en matière plastique ou en bois ou bien un profilé en C revêtu de matière plastique ou de bois.

10. Véhicule de distribution et de mélange conformément à l'une des revendications 5 à 9, **caractérisé par le fait que** la section se déplaçant vers l'avant et la section se déplaçant vers l'arrière de la chaîne (9) défilent parallèlement l'une par rapport à l'autre le long du centre du fond (1) et, que l'écartement entre ces dernières est au maximum égal à ¼ de la largeur du fond (1).

11. Véhicule de distribution et de mélange conformément à la revendication 10, **caractérisé par le fait qu'**une chape (91) commune en forme de toit en coupe transversale se trouve au-dessus des deux sections de la chaîne (9).

12. Véhicule de distribution et de mélange conformément à la revendication 11, **caractérisé par le fait que** la chape (91) comporte à chacune de ses extrémités se trouvant à proximité ou au-dessus des roues de manutention (5, 5') une fermeture (92) biseautée, étant donné que la pointe (93) du biseau repose sur le côté alimentation de la ligne de transport (99).

13. Véhicule de distribution et de mélange conformément à l'une des revendications précédentes, **caractérisé par le fait que** sur la partie de l'arbre mélangeur (8) faisant saillie dans la construction (12) sont agencées à des intervalles réguliers plusieurs ailes de mélange (10) perpendiculaires à l'arbre mélangeur (8), lesquelles ailes se déplacent le long du fond (1), à proximité de cette dernière, lors de la rotation de l'arbre mélangeur (8).

14. Véhicule de distribution et de mélange conformément à la revendication 13, **caractérisé par le fait que** l'extrémité libre de l'arbre mélangeur (8) fait saillie jusque dans la zone proche de la roue de manutention (5) voisine et, que, vu dans le sens de l'arbre mélangeur, l'aile de mélange (10) extérieure circule au-dessus de la roue de manutention (5).

15. Véhicule de distribution et de mélange conformément à la revendication 13 ou 14, **caractérisé par le fait qu'**au moins trois ailes de mélange (10) de longueurs différentes disposées à des intervalles réguliers sont prévus dans le sens circonférentiel de l'arbre mélangeur (8).

16. Véhicule de distribution et de mélange conformément à l'une des revendications 13 à 15, **caractérisé par le fait que** la longueur des ailes de mélange (10) de l'extrémité libre de l'arbre mélangeur (8) jusqu'à la paroi de bout (7) portant ce dernier s'accroît.

17. Véhicule de distribution et de mélange conformément à l'une des revendications 13 à 16, **caractérisé par le fait que** les ailes de mélange (10) sont courbées en forme de croissant et biseautées, la courbure étant orientée dans le sens de rotation (8') de l'arbre mélangeur (8).

18. Véhicule de distribution et de mélange conformément à l'une des revendications 13 à 17, **caractérisé par le fait que** la zone de transition du fond (1) à la paroi de bout (7) portant l'arbre mélangeur (8) est au moins inclinée ou arrondie dans la zone d'action des ailes de mélange (10).

19. Véhicule de distribution et de mélange conformément à l'une des revendications 13 à 18, **caractérisé par le fait que** le mouvement de la ligne de transport (99) et la rotation de l'arbre mélangeur (8) se font dans un rapport tel que l'arbre mélangeur (8) effectue un tour complet ou plusieurs tours lorsque la ligne de transport (99) d'un intervalle entre deux tocs d'entraînement.

20. Véhicule de distribution et de mélange conformément à l'une des revendications précédentes, **caractérisé par le fait que** l'arbre mélangeur (8) est mue par l'intermédiaire d'une commande par chaîne d'un autre arbre (15) par exemple horizontal qui se déplace par exemple dans la ligne médiane longitudinale du fond (1) de la construction (12) en forme de caisse au-dessous des roues de manutention (5, 5'), étant donné que l'autre arbre (15) est couplé à l'une de ses extrémités par l'intermédiaire d'un engrenage conique (16) à l'une des roues de manutention (5, 5') et, à l'autre extrémité, soit porte un accouplement pouvant être branché à une prise de force d'un véhicule tracteur, en particulier un tracteur agricole, soit est directement relié à l'unité d'entraînement du véhicule lui-même.

21. Véhicule de distribution et de mélange conformément à l'une des revendications précédentes, **caractérisé par le fait que** les deux parois de bout (7, 7') ont chacune une projection horizontale en forme de demi-cercle, que l'orifice fermant (20) du fond (1) est parallèle, à peu près en forme de demi-cercle, à la paroi de bout (7) et, que l'orifice (20) peut être fermé par un coulisseau de forme adaptée et ouverte progressivement.

22. Véhicule de distribution et de mélange conformément à la revendication 21, **caractérisé par le fait que** la limite (201) côté opposé à la paroi de l'orifice (20), vue dans le sens de mouvement (9') de la ligne de transport (99), est toujours plus proche de la limite (202) côté paroi de l'orifice (20).

23. Véhicule de distribution et de mélange conformément à l'une des revendications précédentes, **caractérisé par le fait qu'**il existe un axe (2) avec deux roues (3) situé sous le fond (1) entre les deux roues de manutention (5, 5'), à proximité de la roue de manutention (5').

24. Véhicule de distribution et de mélange conformément à l'une des revendications précédentes, **caractérisé par le fait que** la construction (12) en forme de caisse comporte sur sa partie supérieure au moins au-dessus de l'arbre (8) une chape (11) amovible.

25. Véhicule de distribution et de mélange conformément à l'une des revendications précédentes, **caractérisé par le fait que** la chaîne (9) peut être précontrainte dans le sens longitudinal du véhicule de distribution et de mélange par un dispositif tendeur, étant donné que le dispositif tendeur comporte au moins un ressort mécanique ou pneumatique ou hydraulique.

26. Véhicule de distribution et de mélange conformément à l'une des revendications 5 à 25, **caractérisé par le fait que** chacun des tocs d'entraînement (21) comporte un profilé dont la section est angulaire ou en U et/ou porte à ses extrémités des racleurs flexibles élastiques de préférence en caoutchouc.

27. Véhicule de distribution et de mélange conformément à l'une des revendications 5 à 26, **caractérisé par le fait que** plusieurs barrettes racleuses (101, 102) sont agencées sur le fond (1) afin de garantir le raclage avec les tocs d'entraînement (21) et/ou que l'orifice (20) est constitué comme arête de coupe côté intérieur sur ses bords.

28. Véhicule de distribution et de mélange conformément à la revendication 27, **caractérisé par le fait que** les barrettes racleuses (101, 102), vues dans le sens de mouvement (9') de la ligne de transport (99) depuis la chaîne (9), sont inclinées vers l'extérieur.

29. Véhicule de distribution et de mélange conformément à la revendication 27 ou 28, **caractérisé par le fait que**, au niveau du fond (1), côté intérieur de l'orifice (20), est prévue au moins une barrette racleuse (102) courbée dont le mouvement est tangentiel à la limite (201) côté opposé à la paroi de l'orifice (20).

30. Véhicule de distribution et de mélange conformément à la revendication 27 ou 28, **caractérisé par le fait que** les barrettes racleuses (101, 102) montées sur le fond (1) sont en métal ou en matière plastique et sont échangeables.

31. Véhicule de distribution et de mélange conformément à la revendication 27 ou 28, **caractérisé par le fait que**, en plus de ou à la place de l'orifice (20) fermant prévu sous l'arbre mélangeur (10) dans le fond (1) est prévu un orifice fermant à proximité de la paroi de bout (7'), située au côté opposé de l'arbre mélangeur, de la construction (12).
